# EUROPEAN PATENT SPECIFICATION

(11) **EP 3 135 912 B1**
(45) Date of publication and mention of the grant of the patent: **24.06.2020**
(21) Application number: 16186463.2
(22) Date of filing: 31.08.2016
(51) Int. Cl.: F04C 2/32

(54) **PUMP**
PUMPE
POMPE

(30) Priority: 31.08.2015 JP 2015169928
(43) Date of publication of application: 01.03.2017
(73) Proprietor: MAHLE Filter Systems Japan Corporation, Tokyo 170-0004 (JP)
(72) Inventor: HORIMATSU, Toshinobu, Toshima-ku Tokyo 170-0004 (JP); MASUKURA, Satoshi, Toshima-ku Tokyo 170-0004 (JP)
(74) Representative: Grünecker Patent- und Rechtsanwälte PartG mbB

(56) References cited:
- EP-A2- 1 233 179
- WO-A1-01/50012
- DE-A1- 4 434 430
- DE-A1-102010 041 550
- DE-A1-102012 210 781
- US-A1- 2006 019 786
- US-A1- 2009 272 212
- US-A1- 2012 076 678

## Description

### BACKGROUND OF THE INVENTION

### (1) Field of the Invention

The present invention relates to a liquid purpose pump used, for example, as an oil pump of an internal combustion engine or an automatic transmission and, particularly, relates to a pump which is capable of a dual system drive of a mechanical drive and an electrical drive.

### (2) Description of related art

A Japanese Patent Application First Publication No. 2013-072368 published on April 22, 2015 exemplifies a previously proposed trochoid pump used as an automatic transmission purpose oil pump of a hybrid vehicle. This trochoid pump is structured in such a way that an output of an internal combustion engine is transmitted to an inner rotor via a one-way clutch. On the other hand, permanent magnets are disposed on an outer peripheral surface of an outer rotor and the permanent magnets and stator coils disposed on an outer peripheral side of the outer rotor are cooperated to function as an electrically driven motor. In other words, while the internal combustion engine of the hybrid vehicle is operated, the inner rotor is rotationally driven according to the output of the internal combustion engine so that the trochoid pump functions a kind of a mechanical pump. Then, while the internal combustion is stopped, the outer rotor is rotationally driven according to an electrically driven motor constituted by the permanent magnet and the stator coil at the outer peripheral side so that the trochoid pump functions as a kind of the electrically driven oil pump.

In addition, a Japanese Patent Application First Publication No. 2015-117695 published on June 25, 2015 exemplifies a previously proposed rotary positive-displacement pump (this is called a pendulum slider pump) whose form is different from that of the trochoid pump. This pendulum slider pump includes: an inner rotor which integrally rotates with a drive shaft; and an outer rotor which rotates within a cam ring accompanied with a rotation of this inner rotor. A plurality of linkage plates are disposed between both of the inner rotor and the outer rotor to transmit a rotational force from the inner rotor of an inner peripheral side to the outer rotor of an outer peripheral side. These plurality of linkage plates serve to link between the inner rotor and the outer rotor and a space defined between the outer rotor and the inner rotor is partitioned into a plurality of chambers. The outer rotor is positioned eccentrically with respect to the inner rotor. Hence, by rotating both of the inner rotor and the outer rotor, a pump action similar to a vane pump is obtained.

German patent application publication number DE 10 2012 210 781 A1 discloses pendulum slide cell pump for conveying a liquid, in particular for supplying lubricant to an internal combustion engine, with a stator, an outer rotor arranged in the stator and rotatably mounted on it and one in the outer rotor, and an inner rotor which is drive-connected via pendulum slide to the outer rotor. The outer rotor can carry a plurality of magnets arranged distributed in the circumferential direction. The stator has a plurality of electromagnetic coils, so as to produce an electric motor or a generator. In an electric motor operation, the pendulum slide cell pump can be driven via the outer rotor. In a generator mode, a drive shaft connected to the inner rotor rotatably drives the pendulum slide cell pump via the inner rotor. The pump conforms to the preamble of independent claim 1.

International application publication number WO 01/50012 A1 discloses a fuel supply system for an internal combustion engine with a fuel pump that can be operated either by an electric drive or by the internal combustion engine, to allow for a good starting behavior of the internal combustion engine and a low power requirement of the fuel pump during the operation of the internal combustion engine.

United States patent application publication number US 2006 019 .786 A1 discloses an auxiliary machine driven by an engine that comprises: an operating section operated by a rotary motion and haying a drive shaft; an input shaft, one side of which is connected to the engine and the other side of which is connected to the operating section; a clutch for connecting the engine to the input shaft and for disconnecting the engine from the input shaft; an electric motor; a first rotary direction regulating means for inhibiting a rotary direction of the input shaft in one-direction; and a second rotary direction regulating means for inhibiting a rotary direction of the drive shaft. The auxiliary machine can be a compressor.

### SUMMARY OF THE INVENTION

The trochoid pump disclosed in the Japanese Patent Application First Publication No. 2013-072368 is a general structure such that the inner rotor having an n number of lobes is meshed with the outer rotor having an (n+ 1) number of depression sections. In such a trochoid pump as described above, when a rotational drive for the outer rotor side is carried out to try to cause the inner rotor to be driven, a transmission of rotation is mainly carried out by means of a meshing of a single lobe. Thus, a driving force cannot smoothly be transmitted to the inner rotor. Especially, since the number of rotations of the inner rotor is larger than the number of rotations of the outer rotor (depending upon a ratio of the number of the lobes to the number of depression sections), the outer rotor drives in a form of an acceleration of the inner rotor. Thus, a slide resistance becomes very large. Hence, depending upon a state in which the rotational drive for the inner rotor side is carried out and a state in which the rotational drive for the outer rotor side is carried out, actual characteristics are considerably different from each other.

On the other hand, the pump of a form described in the Japanese Patent Application First Publication 2015-117695 can exhibit the pump action by rotationally driving the outer rotor side. However, depending upon a case where the rotational drive for the inner rotor side is carried out and the outer rotor is driven by it and a case where the rotational drive for the outer rotor side and the inner rotor is driven by it, a torque transmission direction in linkage plates becomes an inverse relationship even if the rotational direction is the same. Since a well known linkage plate has an asymmetrical cross sectional shape with only one directional torque transmission taken into consideration, an efficiency at either one is reduced in a case where the torque transmission direction between the outer rotor and the inner rotor is bidirectional.

With these problems in mind, it is an object of the present invention to provide a pump which is capable of achieving both drives of an electrical drive using a motor section and a mechanical drive by means of a second drive source.

The object is solved with a pump according to independent claim 1.

In the structure as provided in claim 1, the outer rotor is rotationally driven using the motor section constituted by the stator at the housing side and the permanent magnets at the outer rotor so that the inner rotor is driven (follows) via the plurality of linkage plates and a pump action is obtained according to a movement of the plurality of chambers partitioned by the linkage plates toward a peripheral direction of the inner rotor. In addition, the drive shaft is rotationally driven by means of the second drive source so that the inner rotor is rotated and the outer rotor is driven via the plurality of linkage plates. Then, the same pump action is obtained according to the peripheral directional movement of the plurality of chambers partitioned by the linkage plates. In each of drive directions, the inner rotor makes one rotation while the outer rotor makes one rotation.

It should, herein, be noted that each of the plurality of linkage plates has the head section swingably supported in a corresponding one of the plate holding grooves formed on the inner peripheral surface of the outer rotor and each of the triangular cross sectioned bulge sections swings and moves forward and backward within a corresponding one of the respectively slots so that a torque transmission between the outer rotor and the inner rotor is carried out. When the outer rotor is driven by means of the motor section, one of the torque transmission surfaces which is one of the surfaces of each of the bulge sections presses one of the pair of inner wall surfaces of the corresponding one of the slots of the inner rotor in the peripheral direction. When the inner rotor is driven by means of the second drive source, the other of the pair of inner wall surfaces of the corresponding one of the slots presses the other of the torque transmission surfaces of the corresponding one of the bulge sections in the peripheral direction. Since each of the linkage plates has a symmetrical cross sectional shape, a favorable torque transmission in each of the drive directions can be carried out.

In a specific aspect of the present disclosure, a shape of each of the bulged sections is determined in such a way that, when at least any one of the linkage plates falls in a first dynamic power transmission angle range determined for an eccentric direction between the outer rotor and the inner rotor, one of the torque transmission surfaces of the one of the linkage plates makes a surface contact on one of a pair of inner wall surfaces of a corresponding one of the slots in parallel and, when at least any one of the linkage plates falls in a second dynamic power transmission angle range determined for the eccentric direction between the outer rotor and the inner rotor, the other of the torque transmission surfaces of the one of the linkage plates makes the surface contact on the other of the pair of inner wall surfaces of the corresponding one of the slots in parallel.
In other words, when either of the torque transmission surfaces makes the surface contact on one of the surfaces of the corresponding one of the slots in substantially parallel, a maximum torque is transmitted between the linkage plates and the slots. Hence, the torque transmission is carried out via the linkage plates only within a constant dynamic power transmission angle range with a particular position (angular position) at which such a relative posture is obtained as a center. When either one of the outer rotor and the inner rotor is driven, the torque transmission is carried out in the first dynamic power transmission angle range. When the other of the outer rotor and the inner rotor is driven, the torque transmission is carried out in the second dynamic power transmission angle range. Since each of linkage plates has the symmetrical cross sectional shape, the first dynamic power transmission angle range and the second dynamic power transmission angle range occur approximately symmetrically with the eccentric direction between the first and second dynamic power transmission angle ranges and provide angle ranges of mutually equal magnitudes.

In a preferred example, the inner rotor is attached onto the drive shaft and the drive shaft is mechanically driven through an output of an internal combustion engine via a one-way clutch. In such a structure as described above, for example, in a hybrid vehicle, if the internal combustion engine is rotated in a state in which the motor section is not electrically driven, the inner rotor is driven via the drive shaft. Then, in a state in which the internal combustion engine is stopped, the motor section drives the outer rotor so that the one-way clutch runs idle and the pump is electrically driven in the state in which the internal combustion engine is stopped.

In a specific example of the present disclosure, the output of the internal combustion engine mechanically serves to drive the inner rotor via a clutch mechanism which is capable of a control of a connection and/or a release from an external.

### BRIEF DESCRIPTION OF THE DRAWINGS

Fig. 1 is a plan view representing a pump according to an example which is not claimed but is nonetheless useful for understanding the present invention in a state in which a cover is removed.
Fig. 2 is a cross sectional view of the pump cut away along a line of A - A shown in Fig. 1.
Fig. 3 is an exploded perspective view of the pump shown in Figs. 1 and 2.
Fig: 4 is an expansion view representing a cross sectional shape of a linkage plate.
Fig. 5 is a cross sectional view representing a a clutch mechanism used in a a pump according to the present invention.

### DETAILED DESCRIPTION OF THE INVENTION

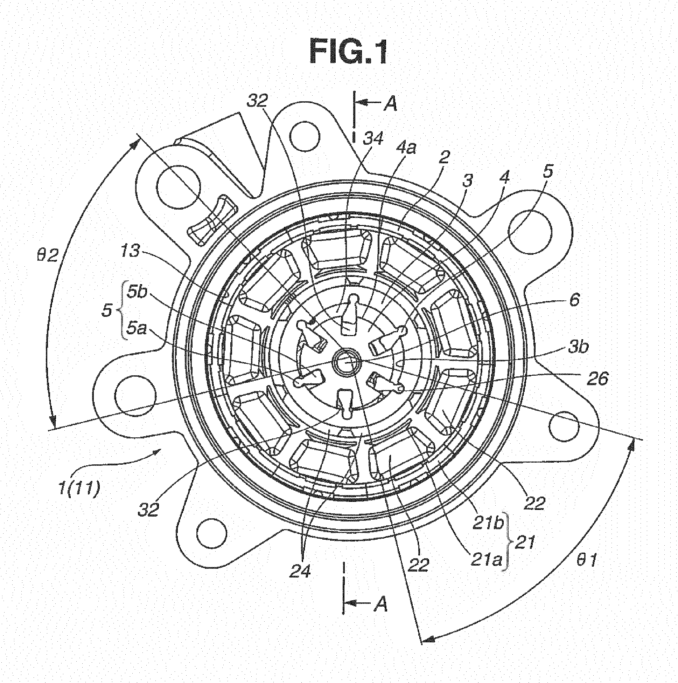

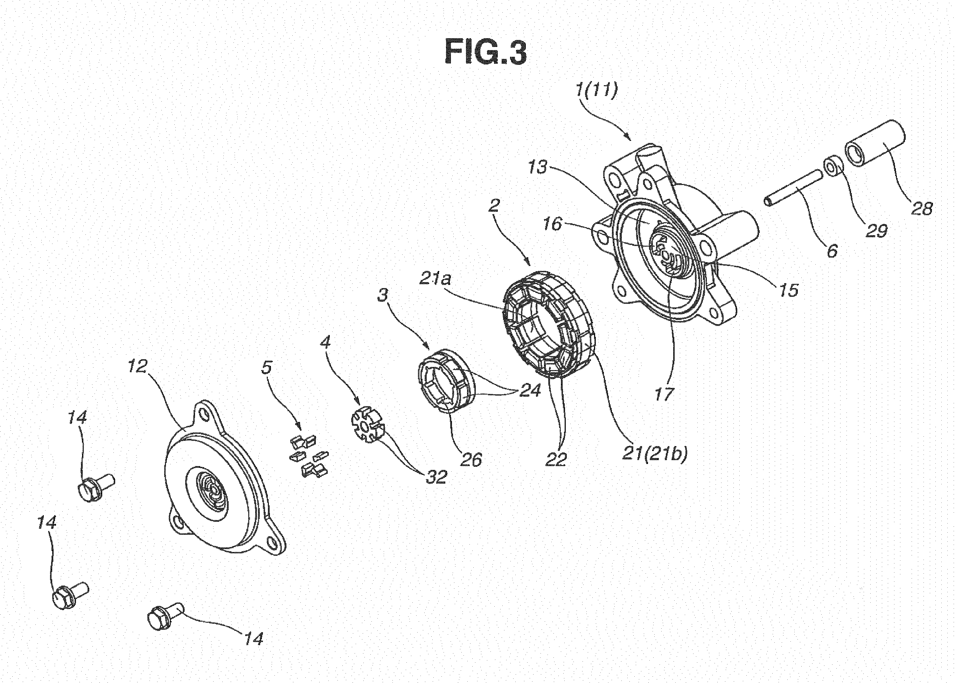

Hereinafter, an example of a pump that is not claimed and a preferred embodiment of a pump according to the present invention will be described on a basis of attached drawings in order to facilitate a better understanding of the present invention. Figs. 1 through 3 show the example in which the pump that does not conform to the invention is, for example, applied as an oil pump for an automatic transmission in a hybrid vehicle.
This oil pump, as shown in Fig. 3, mainly includes: a hollow disk-shaped housing 1 attached at an appropriate position of the automatic transmission or an internal combustion engine; an annular stator 2 housed in this housing 1; a cylindrical outer rotor 3 disposed at an inner peripheral side of this stator 2; an inner rotor 4 disposed at an inner peripheral side of outer rotor 3 and at a position eccentric with respect to outer rotor 3; a plurality (for example, 6) of linkage plates 5 linking between outer rotor 3 and inner rotor 4; and a drive shaft 6 supported around housing 1.

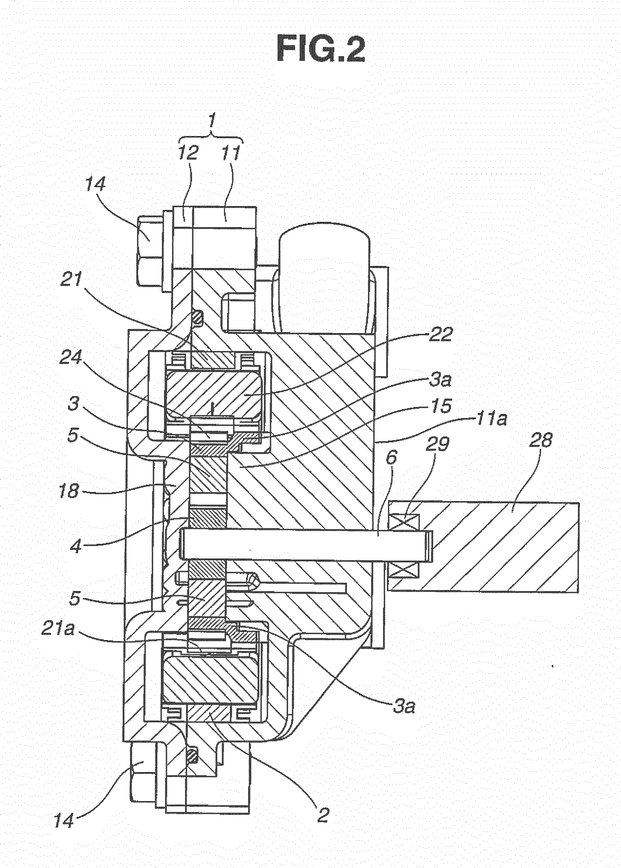

Above-described housing 1 is constituted by and divided into: a main frame 11 on which a stator housing chamber 13 is formed as a recessed section; and a cover 12 which closes an opening surface of stator housing chamber 13 in combination with this main frame 11. These main frame 11 and cover 12 are mutually fastened together with a plurality of bolts 14. A side plate section 15 is formed at a center section of stator housing chamber 13 as a circular protrusion section. Each of a suction port 16 and a discharge port 17 is formed in a crescent shape on an end surface of side plate section 15. In addition, as shown in Fig. 2, another side plate section 18 is formed at the center section of cover 12 as the circular protrusion section. It should be noted that the suction port and the discharge port may be provided on other side plate section 18 at cover side 12. In other words, the suction port may be provided on at least one of two side plate sections 15, 18 and the discharge port may similarly be provided on at least one of two side plate sections 15 and 18. In addition, one of the side plates having the suction port or the discharge port can be constituted by a plate member which is separate from housing 1 itself. Drive shaft 6 is rotatably supported at two locations of main frame 11 and cover 12 and is penetrated through main frame 11 so that one end section of drive shaft 6 is projected from a bottom surface 11a of main frame 11. This drive shaft 6 is arranged at a position eccentric by a predetermined quantity (distance) with respect to a center of each of side plate sections 15, 18. It should be noted that a term of " axial direction " used in the present specification means a direction along a center axial line of drive shaft 6.

Stator 2 is a constituent of a motor section together with outer rotor 3. Stator 2 includes: a 9-slot stator core 21 made of laminated iron cores having a plurality, for example, nine of poles 21a and annular yokes 21b; and coils 22 wound on respective poles 21a. This stator 2 is arranged so as to concentrically enclose side plate sections 15, 18 within stator housing chamber 13 of housing 1.

Outer rotor 3 constitutes a pump section together with inner rotor 4 and, simultaneously, is a constituent corresponding a rotor of the motor section. Outer rotor 3 is, as a whole, cylindrical and a plurality of, for example, plate-like six permanent magnets 24 bent in arc shapes are attached on an outer peripheral surface of outer rotor 3 at equal intervals. N poles and S poles of permanent magnets 24 are alternatingly arranged to constitute the motor section in cooperation with stator 2. These permanent magnets 24 are opposed against inner peripheral surfaces of poles 21a of stator 2 via a slight air gap. A bearing section 3a (refer to Fig. 2) disposed on one end section of cylindrical outer rotor 3 and having a diameter slightly larger than the other part is rotatably fitted to the outer periphery of side plate section 15 of main frame 11. Thus, outer rotor 3 is rotatably supported on housing 1.

Plate holding grooves 26, each recessed in cross sectional circular or cross sectional letter C shape, are formed at equal intervals at a plurality of locations, for example, six locations on inner peripheral surface 3b of outer rotor 3. Each plate holding groove 26 is extended in the axial direction of outer rotor 3 and both ends of each plate holding groove 26 is opened to the end surface of outer rotor 3.

Inner rotor 4 disposed at the inner periphery side of outer rotor 3 is positioned eccentrically from the center of outer rotor 3 so that a part of outer peripheral surface 4a of inner rotor 4 comes close to inner peripheral surface 3b of outer rotor 3 and inner rotor 4 is attached to drive shaft 6 to rotate integrally with drive shaft 6. In other words, inner rotor 4 can rotationally be driven with drive shaft 6. An internal combustion engine side drive shaft 28 which rotates by means of an engine output of the internal combustion engine which provides a second drive source is connected to one end section of drive shaft 6 via a one-way clutch 29. This one-way clutch 29 is in an engaged state in a state in which the internal combustion engine is driven and internal combustion engine side drive shaft 28 rotationally drives inner rotor 4. When internal combustion engine side drive shaft 28 is stopped and inner rotor 4 (in other words, drive shaft 6) is electrically driven by means of the motor section, in other words, when a rotational speed of drive shaft 6 is higher than the rotational speed of internal combustion engine side drive shaft 28, one-way clutch 29 runs idle, viz., becomes a released state.

Six rectangular slots 32 which correspond to the number of plate holding grooves 26 are radially formed on outer peripheral surface 4a of inner rotor 4. In more details, slots 32 have a mutually parallel pair of inner wall surfaces and the pair of inner wall surfaces are formed along a radius line of inner rotor 4 so that the pair of inner wall surfaces become parallel to the radius line. Each slot 32 is extended in the axial direction of inner rotor 4 and both ends of each of slots 32 are opened to end surfaces of inner rotor 4.

As a result of an eccentricity of inner rotor 4 with respect to inner peripheral surface 3b of outer rotor 3, a crescent-shaped space, as shown in Fig. 1, is formed between inner rotor 4 and outer rotor 3.
Then, this crescent-shaped space is, further, partitioned into six chambers 34 by means of six linkage plates 5. Each of these linkage plates 5 is formed in a plate-like shape having a pendulum shaped cross sectional shape approximating to a substantial triangular shape. A head section 5a located at an outer peripheral end of each linkage plate 5 is swingably fitted to a corresponding one of plate holding grooves 26 of outer rotor 3 and a bulged section 5b bulged out in the peripheral direction at the inner peripheral side of each linkage plate 5 is swingably inserted into a corresponding one of slots 32 of inner rotor 4.

As is easily understood from Fig. 1, a distance between inner peripheral surface 3b of outer rotor 3 and outer peripheral surface 4a of inner rotor 4 is varied in accordance with rotational positions of mutually eccentric outer rotor 3 and inner rotor 4 and a volume of each chamber 34 partitioned by means of linkage plates 5 is increasingly or decreasingly varied. Hence, outer rotor 3 and inner rotor 4 are rotated in a clockwise direction in Fig. 1 so that a pump action is obtained by which oil is pumped (pressure feed) from suction port 16 to discharge port 17 disposed on side plate sections 15, 18.

In a hybrid vehicle having the internal combustion engine and a running purpose motor/generator as drive sources of the vehicle, the internal combustion engine is driven only at a time of necessity and is in a stopped state at a time of unnecessity. During an operation of the internal combustion engine, drive shaft 6 is rotationally driven by means of internal combustion engine side drive shaft 28 via one-way clutch 29. Hence, from among outer rotor 3 and inner rotor 4 constituting the pump section, inner rotor 4 is a drive side and outer rotor 3 is driven. In other words, in association with the rotation of inner rotor 4, the inner wall surface of slots 32 presses linkage plates 33 fitted to slots 32 in the peripheral direction. Then, since head section 5a of linkage plate 5 is linked to plate holding groove 26, the torque is transmitted to outer rotor 3 and outer rotor 3 is rotated together with inner rotor 4. Thus, the above-described pump action is obtained.

In addition, during the stop of the internal combustion engine, outer rotor 3 is rotationally driven by means of a motor section constituted by outer rotor 3 on which permanent magnets 24 are disposed and stator 2. In other words, in the above-described example, coils 22 and permanent magnets 24 constitute a three-phase 6-pole 9-slot motor section. Coils 22 are driven via an appropriate motor drive circuit including an inverter so that outer rotor 3 can be rotated within stator 2. Hence, from among outer rotor 3 and inner rotor 4 constituting the pump section, outer rotor 3 becomes the drive side and inner rotor 4 is driven. In other words, when outer rotor 3 is rotated, linkage plates 5 supported on plate holding grooves 26 press inner peripheral surfaces of corresponding slots 32 in the peripheral direction and the torque is transmitted to inner rotor 4. Thus, inner rotor 4 is rotated together with outer rotor 3 and the above-described pump action is, all in the same way, obtained.

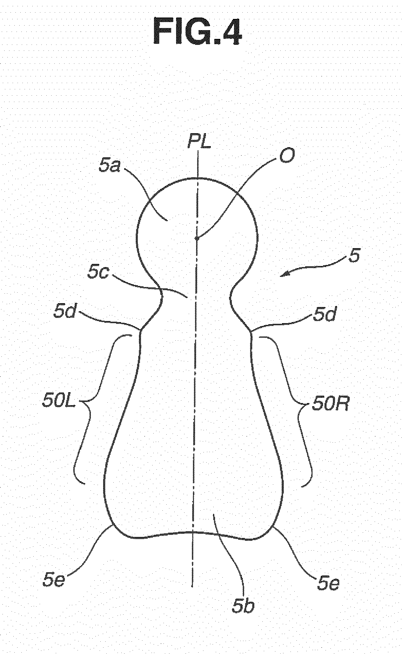

Fig. 4 more specifically shows a cross sectional shape of each of linkage plates 5 which mutually transmit the rotational force between outer rotor 3 and inner rotor 4. It should be noted that each of linkage plates 5 has a constant cross sectional shape over a whole length in the axial direction. Hence, an outside shape (appearance form) of an end section viewed from Fig. 1 and the cross sectional shape are not changed. As described before, each of linkage plates 5 includes: head section 5a having a cross sectional circular shape and swingably fitted into a corresponding one of plate holding grooves 26; and bulged section 5b bulged out (expanded) in a substantially triangular shape. In more details, a slender, constricted neck section 5c is provided between head section 5a and bulged section 5b in order to largely secure a swing angle with respect to the corresponding one of plate holding grooves 26 and, adjacent to this neck section 5c, a pair of shoulder sections 5d are provided which are slightly projected In leftward and rightward directions in Fig. 4. Then, substantially straight line torque transmission surfaces 50 (50R, 50L) are provided between a pair of corner sections 5e which are outer peripheral ends of bulge section 5b and pair of shoulder sections 5d. It should be noted that, in a case where left and right torque transmission surfaces 50 are distinguished, the left torque transmission surface in Fig. 4 is called a first torque transmission surface 50L and the right torque transmission surface in Fig 4 is called a second torque transmission surface 50R. Outer peripheral side portions of torque transmission surfaces 50 (a lower side portion of Fig. 4) and corner sections 5e continued from the outer peripheral side portions of torque transmission surfaces 50L, 50R form moderate curved surfaces convex toward the outside direction in such a way that two left and right locations of the outer peripheral side portions of torque transmission surfaces 50 (50L, 50R) and corner sections 5e continued therefrom can be moved along the inner wall surface of the corresponding one of slots 32 when these are swung within the corresponding one of slots 32 having a parallel width as shown in Fig. 1. In other words, when each of linkage plates 5 provides a posture slanted with respect to the corresponding one of slots 32, a curved shape of the lower part in Fig. 4 of bulge section 5b is set in order for two points in the proximity of pair of corner sections 5e to be maintained in a substantially contacted state on the left and right inner wall surfaces.

The cross sectional shape of each of linkage plates 5 shown in Fig. 4 has a bilaterally symmetric shape with a plane PL passing through a swing center O of head section 5a as a center. Hence, first torque transmission surface 50L and second torque transmission surface 50R are symmetrically formed with plane PL as the center.

In this way, each of linkage plates 5 has the bilaterally symmetrical cross sectional shape. Thus, the oil pump in the above-described example can equally obtain smooth actions and can equivalently obtain the efficiency when inner rotor 4 is rotationally driven by means of the output of the internal combustion engine and when outer rotor 4 is rotationally driven by means of the motor section.

In other words, since inner rotor 4 is eccentric to inner peripheral surface 3b of outer rotor 3, as described before, each of linkage plates 5 described above moves forward and backward and swings within the corresponding one of slots 32 in accordance with a rotational position. If a corresponding one of each of linkage plates 5 is contacted on the pair of inner wall surfaces of corresponding one of slots 32 in the vicinity of pair of corners 5e and left and right (first and second) torque transmission surfaces 50 (50L, 50R) are in a separation state from the pair of inner wall surfaces of the corresponding one of slots 32 (in other words, a posture such that center plane PL of the corresponding one of each of linkage plates 5 is along a radius line of inner rotor 4), the corresponding one of linkage plates 5 can freely be swung. Thus, the torque transmission between both of the corresponding one of linkage plates 5 and the corresponding one of slots 32 (outer rotor 3 and inner rotor 4) becomes impossible. Then, as the positional relationship between the corresponding one of each of linkage plates 5 and the corresponding one of slots 32, when one of torque transmission surfaces 50 is surface contacted on the corresponding one of inner peripheral surfaces of the corresponding one of slots 32 in substantially parallel, a maximum torque transmission is performed. Hence, only when one of linkage plates 5 falls in a particular angle range while individual linkage plates 5 are moved through 360°, a substantial torque transmission is possible.

In more details, when inner rotor 4 is rotationally driven and outer rotor 3 is driven (follows) and at least any one of linkage plates 5 is present in a first power transmission angle range *θ*1 shown in Fig. 1, the torque transmission via the one of linkage plates 5 is carried out. In other words, when the one of linkage plates 5 is present at a substantially center angular position of this first power transmission angle range *θ*1, first torque transmission surface 50L of the one of linkage plates 5 is surface contacted on one of the pair of inner wall surfaces of the corresponding one of slots 32 (a surface which provides a rear side with respect to the clockwise direction rotation in Fig. 1) in substantially parallel. Since inner rotor 4 which is the drive side is rotated in the clockwise direction shown in Fig. 1, first torque transmission surface 50L of the one of linkage plates 5 is pressed by the one of the pair of inner wall surfaces of corresponding one of slots 32 in the peripheral direction and the torque is transmitted to outer rotor 3.

On the other hand, when outer rotor 3 is rotationally driven and inner rotor 4 is driven (follows) and at least any other one of linkage plates 5 is present in a second power transmission angle range *θ*2 shown in Fig. 1, the torque transmission via the other one of linkage plates 5 is carried out. In other words, when the other one of linkage plates 5 is present at a substantially center angular position of this second power transmission angle range *θ*2, second torque transmission surface 50R of the other one of linkage plates 5 is surface contacted on the other of the pair of inner wall surfaces of the corresponding one of slots 32 (a surface which provides a front side with respect to the clockwise direction rotation in Fig. 1) substantially parallel. Since outer rotor 3 which is the drive side is rotated in the clockwise direction shown in Fig. 1, the other of the pair of inner wall surfaces of the corresponding one of slots 32 is pressed by second torque transmission surface 50R of the other one of linkage plates 5 in the peripheral direction and the torque is transmitted to inner rotor 4.

Since first torque transmission surface 50L and second torque transmission surface 50R are symmetrically formed, in Fig. 1, first power transmission angle range *θ*1 and second power transmission angle range *θ*2 are mutually symmetrically obtained and provide mutually equal angle ranges, with an angular position along an eccentric direction of inner rotor 4 with respect to outer rotor 3 as a center. Hence, even if inner rotor 4 is the drive side and even if outer rotor 3 is the drive side, the torque transmission at mutually equal efficiencies is carried out and the same characteristics can be obtained.

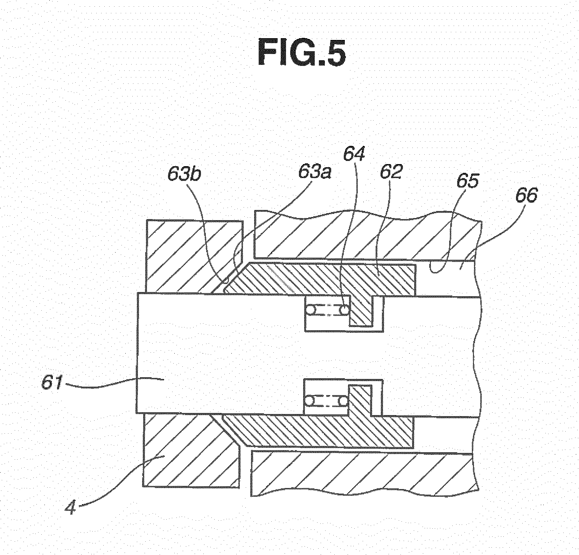

Next, Fig. 5 shows an embodiment of the present invention in which an externally controllable clutch mechanism is interposed between a drive side 61 driven by means of the output of the internal combustion engine and inner rotor 4, in place of one-way clutch 29 in the above-described example. In the embodiment, drive side 61 is not fixed onto inner rotor 4 but is rotatably fitted into a center hole of inner rotor 4. Then, a cylindrical clutch member 62 which is a main constituent of the clutch mechanism is disposed on an outer periphery of drive side 61. This clutch member 62 is fitted to drive side 61 so as to be unrotational and axially slidable with respect to drive side by means of, for example, a spline coupling, a key coupling, or so forth. This clutch member 62 is rotatably retained in bearing hole 65 of main frame 11 of housing 1 described before together with drive side 61. Tapered mesh surfaces 63a, 63b which are slanted at appropriate angles with respect to a center axle of drive side 61 are respectively formed between a tip of this clutch member 62 and inner rotor 4. Teeth sections are provided on these mesh surfaces 63a, 63b along a radius direction mutually meshed.

Clutch member 62 is biased against drive side 61 in a backward direction by means of a coil spring 64 so that mesh surfaces 63a, 63b are mutually separated from each other. In addition, a hydraulic pressure chamber 66 is faced against an end surface of clutch member 62 and interposed between drive side 61 and bearing hole 65. The clutch mechanism is switched by introducing an external commanded hydraulic pressure into this hydraulic pressure chamber 66.

That is, in a case where the internal combustion engine is stopped and the electrical drive is performed by means of the motor section, meshing of mesh surfaces 63a 63b are released by dropping the commanded hydraulic pressure and drive side 61 and inner rotor 4 becomes mutually relative rotatable.

On the contrary, in a case where the mechanical drive is performed by means of the output of the internal combustion engine, mesh surfaces 63a, 63b are mutually engaged by introducing a predetermined commanded hydraulic pressure into hydraulic pressure chamber 66. Thus, inner rotor 4 is rotationally driven by means of the output of the internal combustion engine.

According to the present invention, the pump which is capable of both drives of the electrical drive using the motor section and the mechanical drive by means of the second drive source can be provided. Especially, equivalent efficiencies and characteristics can be secured between the electrical drive and the mechanical drive.

This application is based on a prior Japanese Patent Application No. 2015-169928 filed in Japan on August 31, 2015. Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. A pump, comprising:
a housing (1) including a suction port (16), a discharge port (16), and an annular stator (2);
a cylindrical outer rotor (3) rotatably disposed at an inner peripheral side of the annular stator, including a plurality of permanent magnets (24) arranged on an outer peripheral surface of the cylindrical outer rotor to constitute a motor section in cooperation with the annular stator, and a plurality of plate holding grooves (26), each plate holding groove (26) having a letter C shape in cross section, being extended in an axial direction of the cylindrical outer rotor (3), and being formed on an inner peripheral surface of the cylindrical outer rotor (3);
an inner rotor (4) disposed at a position eccentric with respect to the cylindrical outer rotor (3), disposed at an inner peripheral side of the cylindrical outer rotor, constituting a space communicated with the suction port and the discharge port against the cylindrical outer rotor, and having an outer peripheral surface on which a plurality of slots (32) are formed in a radial direction of the inner rotor;
a plurality of linkage plates (4), each linkage plate (4) having a head section (5a) and a bulge section (5b) of a triangular cross section slidably fitted into a corresponding one of the slots (32), configured to partition the space into a plurality of chambers (34),
wherein the number of linkage plates (5) is six and each of the linkage plates (5) includes torque transmission surfaces (50L, 50R) on both surfaces of a corresponding one of the bulge sections (5b) to transmit rotational forces mutually between the cylindrical outer rotor (3) and the inner rotor (4), the head section (5a) of each linkage plate (4) is of a circular cross section swingably fitted into the corresponding one of the plate holding grooves, and each of the linkage plates (5) has a symmetrical cross sectional shape with a plane (PL) passing through a swing center (O) of a corresponding one of the head sections (5a) as a center,
**characterized by**
the stator including a nine-slot stator core made of laminated cores having a plurality of poles (21a) and coils (22) wound on respective poles (21a);
a drive side (61) rotatably fitted into a center hole of the inner rotor (4) and connectable to an output shaft of an internal combustion engine; and
a clutch member (62) which is fitted to the drive side (61) so as to be unrotational and axially slidable with respect to the drive side (61) and is disposed on an outer periphery of the drive side (61), wherein
the clutch member (62) is rotatably retained in a bearing hole (65) of the housing (1) together with the drive side (61),
tapered mesh surfaces (63a, 63b) which are slanted at angles with respect to a center axis of the drive side (61) are respectively formed between a tip of the clutch member (62) and the inner rotor (4),
teeth sections for mutually meshing are provided on the mesh surfaces (63a, 63b) along a radius direction,
the clutch member (62) is biased against the drive side (61) in a backward direction by means of a coil spring (64) so that the mesh surfaces (63a, 63b) are mutually separated from each other,
a hydraulic pressure chamber (66) is faced against an end surface of the clutch member (62) and interposed between drive side (61) and the bearing hole (65),
the pump is configured such that
introducing a predetermined hydraulic pressure into the hydraulic pressure chamber (66) causes the mesh surfaces (63a, 63b) to be mutually engaged so that the inner rotor (4) can be rotationally driven by the drive side (61), and
dropping the hydraulic pressure causes the meshing of mesh surfaces (63a 63b) to be released so that the drive side (61) and inner rotor (4) become mutually relatively rotatable,
each linkage plate (5) further includes:
a neck section (5c) provided between the head section (5a) and the bulge section (5b); and
a pair of shoulder sections (5d), provided adjacent to the neck section (5c), which are projected in leftward and rightward directions, and
a pair of corner sections (5e) which are outer peripheral ends of the bulge section (5b),
the torque transmission surfaces (50R, 50L) are provided between the pair of shoulder sections (5d) and the pair of corner sections (5e) and formed such that the each corner section (5e) continues from one of the torque transmission surfaces (50R, 50L),
outer peripheral side portions of the torque transmission surfaces (50R, 50L) and the corner sections (5e) continued therefrom form moderate curved surfaces that are convex in such a way that locations on each moderate curved surface move along the inner wall surface of the corresponding one of the slots (32) when the linkage plate (4) is swung within the corresponding one of the slots (32), and
a shape of each of the bulge sections is determined in such a way that, when at least any one of the linkage plates (5) falls in a first dynamic power transmission angle range (θ1) determined for an eccentric direction between the outer rotor (3) and the inner rotor (4), one of the torque transmission surfaces (50L, 50R) of the one of the linkage plates (5) makes a surface contact on one of a pair of inner wall surfaces of a corresponding one of the slots (32) in parallel and, when at least any one of the linkage plates (5) falls in a second dynamic power transmission angle range (θ2) determined for the eccentric direction and symmetric to the first dynamic power transmission angle range (θ1) about the eccentric direction, the other of the torque transmission surfaces (50L, 50R) of the one of the linkage plates (5) makes the surface contact on the other of the pair of inner wall surfaces of the corresponding one of the slots (32) in parallel.

## Patentansprüche

1. Eine Pumpe, umfassend:
ein Gehäuse (1) mit einer Saugöffnung (16), einer Auslassöffnung (16) und einen ringförmigen Stator (2);
einen zylindrischen Außenrotor (3), der drehbar an einer inneren Umfangsseite des Ringstators angeordnet ist, einschließlich einer Vielzahl von Permanentmagneten (24), die auf einer Außenumfangsfläche des zylindrischen Außenrotors angeordnet sind, um in Zusammenarbeit mit dem Ringstator einen Motorabschnitt zu bilden und eine Vielzahl von Plattenhalterillen (26), wobei jede Plattenhalterille (26) im Querschnitt eine Form des Buchstabens C aufweist, in axialer Richtung des zylindrischen Außenrotors (3) verlängert ist und an einer inneren Umfangsfläche des zylindrischen Außenrotors (3) ausgebildet ist;
einen Innenrotor (4), der an einer exzentrischen Position in Bezug auf den zylindrischen Außenrotor (3) angeordnet ist und an einer inneren Umfangsseite des zylindrischen Außenrotors angeordnet ist und einen Raum bildet, der mit der Saugöffnung und der Auslassöffnung gegen den zylindrischen Außenrotors verbunden ist und mit einer äußeren Umfangsfläche, auf der eine Vielzahl von Schlitzen (32) in radialer Richtung des inneren Rotors ausgebildet sind;
eine Vielzahl von Verbindungsplatten (5), wobei jede Verbindungsplatte (5) einen Kopfabschnitt (5a) und einen Ausbuchtungsabschnitt (5b) mit einem dreieckigen Querschnitt aufweist, der verschiebbar in einen entsprechenden der Schlitze (32) eingepasst ist, so konfiguriert dass der Raums in eine Vielzahl von Kammern (34) getrennt wird,
wobei die Anzahl der Verbindungsplatten (5) sechs beträgt und jede der Verbindungsplatten (5) Drehmomentübertragungsflächen (50L, 50R) auf beiden Oberflächen eines entsprechenden der Ausbuchtungsabschnitte (5b) enthält, um Rotationskräfte gegenseitig zwischen dem zylindrische Außenrotor (3) und dem Innenrotor (4) zu übertragen, der Kopfabschnitt (5a) jeder Verbindungsplatte (5) hat einen kreisförmigen Querschnitt, der schwenkbar in die entsprechende der Plattenhalterillen eingepasst ist und jede der Verbindungsplatten (5) hat eine symmetrische Querschnittsform mit einer Ebene (PL), die durch ein Schwenkzentrum (O) als ein Zentrum eines entsprechenden der Kopfabschnitte (5a) verläuft,
**gekennzeichnet dadurch dass**
der Stator einen Statorkern mit neun Schlitzen aus laminierten Kernen mit einer Vielzahl von Polen (21a) und Spulen (22), die auf die jeweiligen Pole (21a) gewickelt sind, umfasst;
eine Antriebsseite (61), die drehbar in ein Zentralloch des Innenrotors (4) eingepasst und mit einer Abtriebswelle eines Verbrennungsmotors verbindbar ist; und
ein Kupplungselement (62), das an der Antriebsseite (61) so angebracht ist, dass es in Bezug auf die Antriebsseite (61) nicht drehbar und axial verschiebbar ist und an einem Außenumfang der Antriebsseite (61) angeordnet ist, wobei
das Kupplungselement (62) wird zusammen mit der Antriebsseite (61) drehbar in einem Lagerloch (65) des Gehäuses (1) gehalten,
sich verjüngende Eingriffsflächen (63a, 63b), die in Winkeln zu einer Mittelachse der Antriebsseite (61) geneigt sind, sind jeweils zwischen einer Spitze des Kupplungselements (62) und dem Innenrotor (4) ausgebildet.
Zahnabschnitte zum gegenseitigen Ineinandergreifen sind entlang einer Radiusrichtung auf den Eingriffsflächen (63a, 63b) vorgesehen.
das Kupplungselement (62) ist mittels einer Schraubenfeder (64) in Rückwärtsrichtung gegen die Antriebsseite (61) vorgespannt, so dass die Eingriffsflächen (63a, 63b) gegenseitig voneinander getrennt sind,
eine hydraulische Druckkammer (66) ist gegen eine Endfläche des Kupplungselements (62) gerichtet und zwischen der Antriebsseite (61) und dem Lagerloch (65) angeordnet,
die Pumpe ist so konfiguriert, dass
das Einbringen eines vorbestimmten Hydraulikdrucks in die Hydraulikdruckkammer (66) bewirkt, dass die Eingriffsflächen (63a, 63b) miteinander in Eingriff stehen, so dass der Innenrotor (4) von der Antriebsseite (61) drehend betrieben werden kann, und
durch Absenken des Hydraulikdrucks das Ineinandergreifen der Eingriffsflächen (63a, 63b) gelöst wird, so dass die Antriebsseite (61) und der Innenrotor (4) relativ drehbar werden.
jede Verbindungsplatte (5) enthält ferner:
einen Halsabschnitt (5c), der zwischen dem Kopfabschnitt (5a) und dem Ausbuchtungsabschnitt (5b) vorgesehen ist; und
ein Paar Schulterabschnitte (5d), die neben dem Halsabschnitt (5c) vorgesehen sind und in Links- und Rechtsrichtung vorstehen, und
ein Paar Eckabschnitte (5e), die äußere Umfangsenden des Ausbuchtungsabschnitts (5b) sind,
die Drehmomentübertragungsflächen (50R, 50L) zwischen dem Paar von Schulterabschnitten (5d) und dem Paar von Eckabschnitten (5e) vorgesehen und so ausgebildet sind, dass sich jeder Eckabschnitt (5e) von einer der Drehmomentübertragungsflächen (50R, 50L) fortsetzt,
äußere periphere Seitenteile der Drehmomentübertragungsflächen (50R, 50L) und die daraus fortgesetzten Eckabschnitte (5e) bilden mäßig gekrümmte Flächen, die in einer Art konvex sind, dass sich Stellen auf jeder mäßig gekrümmten Fläche entlang der Innenwandfläche des entsprechenden Schlitzes (32) bewegen, wenn die Verbindungsplatte (5) innerhalb des entsprechenden Schlitzes (32) geschwenkt wird, und
eine Form jedes der Ausbuchtungsabschnitte wird derart bestimmt, dass, wenn mindestens eine der Verbindungsplatten (5) in einen ersten dynamischen Kraftübertragungswinkelbereich (θ1) fällt, der für eine exzentrische Richtung zwischen dem Außenrotor (3) und der Innenrotor (4) bestimmt ist, eine der Drehmomentübertragungsflächen (50L, 50R) dieser Verbindungsplatte (5) einen parallelen Oberflächenkontakt auf einer von zwei Innenwandflächen eines entsprechenden Schlitzes (32) herstellt und, wenn mindestens eine der Verbindungsplatten (5) in einen zweiten dynamischen Leistungsübertragungswinkelbereich (θ2) fällt, der für die exzentrische Richtung und in der exzentrischen Richtung symmetrisch zum ersten dynamischen Leistungsübertragungswinkelbereich (θ1) bestimmt ist, die andere der Drehmomentübertragungsflächen (50L, 50R) dieser Verbindungsplatten (5) den parallelen Oberflächenkontakt auf der anderen Seite des Paares von Innenwandflächen der entsprechenden Schlitzes (32) herstellt.

## Revendications

1. Pompe, comprenant:
un carter (1) comprenant un orifice d'aspiration (16), un orifice de refoulement (16) et un stator annulaire (2);
un rotor extérieur cylindrique (3) disposé de manière à pouvoir tourner sur un côté périphérique intérieur du stator annulaire,
comprenant une pluralité d'aimants permanents (24) disposés sur une surface périphérique extérieure du rotor extérieur cylindrique pour constituer une section de moteur en coopération avec le stator annulaire, et une pluralité de rainures de maintien de plaque (26), chaque rainure de maintien de plaque (26) ayant une forme de lettre C en section transversale,
s'étendant dans une direction axiale du rotor extérieur cylindrique (3), et étant formé sur une surface périphérique intérieure du rotor extérieur cylindrique (3);
un rotor intérieur (4) disposé à une position excentrique par rapport au rotor extérieur cylindrique (3),
disposé sur un côté périphérique intérieur du rotor extérieur cylindrique, constituant un espace communiquant avec l'orifice d'aspiration et l'orifice de refoulement contre le rotor extérieur cylindrique, et ayant une surface périphérique extérieure sur laquelle une pluralité de fentes (32) sont formées dans une direction radiale du rotor intérieur;
une pluralité de plaques de liaison (4), chaque plaque de liaison (4) ayant une section de tête (5a) et une section de renflement (5b) de section transversale triangulaire ajustée de manière coulissante dans une fente correspondante des fentes (32), configurée pour diviser l'espace en une pluralité de chambres (34),
dans laquelle le nombre de plaques de liaison (5) est de six et chacune des plaques de liaison (5) comprend des surfaces de transmission de couple (50L, 50R) sur les deux surfaces d'une des sections de renflement correspondantes (5b) pour transmettre des forces de rotation mutuellement entre le rotor extérieur cylindrique (3) et le rotor intérieur (4), la section de tête (5a) de chaque plaque de liaison (4) est de section circulaire et est montée de manière pivotante dans la rainure de maintien de la plaque correspondante, et chacune des plaques de liaison (5) a une forme de section symétrique avec un plan (PL) passant par un centre de pivotement (O) de l'une des sections de tête (5a) correspondante comme centre,
**caractérisé par**
le stator comprenant un noyau de stator à neuf fentes constitué de noyaux laminés ayant une pluralité de pôles (21 a) et de bobines (22) enroulées sur des pôles respectifs (21a);
un côté d'entraînement (61) monté à rotation dans un trou central du rotor intérieur (4) et pouvant être connecté à un arbre de sortie d'un moteur à combustion interne; et
un élément d'embrayage (62) qui est monté sur le côté entraînement (61) de manière à ne pas pouvoir tourner et à pouvoir coulisser axialement par rapport au côté entraînement (61) et qui est disposé sur une périphérie extérieure du côté entraînement (61), dans lequel
l'élément d'embrayage (62) est maintenu en rotation dans un trou de palier (65) du boîtier (1) avec le côté entraînement (61),
des surfaces de mailles coniques (63a, 63b) inclinées par rapport à un axe central du côté entraînement (61) sont respectivement formées entre une pointe de l'élément d'embrayage (62) et le rotor intérieur (4),
des sections de dents pour l'engrènement mutuel sont prévues sur les surfaces des mailles (63a, 63b) dans le sens du rayon,
l'élément d'embrayage (62) est sollicité vers l'arrière contre le côté entraînement (61) au moyen d'un ressort hélicoïdal (64), de sorte que les surfaces d'engrènement (63a, 63b) sont séparées l'une de l'autre,
une chambre de pression hydraulique (66) est placée contre une surface d'extrémité de l'élément d'embrayage (62) et interposée entre le côté entraînement (61) et le trou de palier (65),
la pompe est configurée de telle sorte que
l'introduction d'une pression hydraulique prédéterminée dans la chambre de pression hydraulique (66) provoque l'engagement mutuel des surfaces d'engrènement (63a, 63b) de sorte que le rotor intérieur (4) peut être entraîné en rotation par le côté entraînement (61), et
la chute de la pression hydraulique entraîne la libération de l'engrènement des surfaces de maille (63a 63b), de sorte que le côté entraînement (61) et le rotor intérieur (4) deviennent relativement rotatifs l'un par rapport à l'autre,
chaque plaque de liaison (5) comprend en outre
une section de cou (5c) prévue entre la section de tête (5a) et la section de renflement (5b),
une paire de sections d'épaules (5d), prévues à côté de la section du cou (5c), qui sont projetées vers la gauche et vers la droite,
une paire de sections d'angle (5e) qui sont les extrémités périphériques extérieures de la section de renflement (5b),
les surfaces de transmission de couple (50R, 50L) sont prévues entre la paire de sections d'épaulement (5d) et la paire de sections de coin (5e) et formées de telle sorte que chaque section de coin (5e) se prolonge à partir d'une des surfaces de transmission de couple (50R, 50L),
les parties latérales périphériques extérieures des surfaces de transmission du couple (50R, 50L) et les sections d'angle (5e) qui en découlent forment des surfaces modérément incurvées qui sont convexes de telle sorte que les emplacements de chaque surface modérément incurvée se déplacent le long de la surface de paroi intérieure de l'une des fentes (32) correspondantes lorsque la plaque de liaison (4) est pivotée dans l'une des fentes (32) correspondantes, et
une forme de chacune des sections de renflement est déterminée de telle manière que, lorsque l'une au moins des plaques de liaison (5) se trouve dans une première plage d'angles de transmission de puissance dynamique (01) déterminée pour une direction excentrique entre le rotor extérieur (3) et le rotor intérieur (4), l'une des surfaces de transmission de couple (50L, 50R) de l'une des plaques de liaison (5) entre en contact avec l'une des deux surfaces de paroi intérieure d'une fente correspondante (32) en parallèle et, lorsqu'au moins l'une des plaques de liaison (5) se trouve dans une seconde plage d'angles de transmission de puissance dynamique (02) déterminée pour la direction excentrique et symétrique à la première plage d'angles de transmission de puissance dynamique (01) autour de la direction excentrique, l'autre des surfaces de transmission de couple (50L, 50R) de l'une des plaques de liaison (5) entre en contact avec l'autre de la paire de surfaces de paroi intérieure de la fente correspondante (32) en parallèle.
